(19) Europäisches Patentamt
European Patent Office
Office européen des brevets

(11) EP 4 779 778 A1

(12) EUROPEAN PATENT APPLICATION

(43) Date of publication:
22.07.2026 Bulletin 2026/30

(51) International Patent Classification (IPC):
*H01M 50/293* (2021.01)   *H01M 10/658* (2014.01)
*H01M 50/291* (2021.01)   *H01M 50/209* (2021.01)

(21) Application number: 26151350.1

(22) Date of filing: 12.01.2026

(52) Cooperative Patent Classification (CPC):
**H01M 50/293; H01M 10/658; H01M 50/291;**
H01M 50/209; H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 13.01.2025 KR 20250004663

(71) Applicant: SK On Co., Ltd.
Seoul 03161 (KR)

(72) Inventors:
• JANG, Won Joon
34124 Daejeon (KR)
• LEE, Seung Min
34124 Daejeon (KR)

(74) Representative: **Prüfer & Partner mbB
Patentanwälte · Rechtsanwälte
Sohnckestraße 12
81479 München (DE)**

(54) **BATTERY ASSEMBLY**

(57)   The present disclosure relates to a battery assembly. The battery assembly comprises a plurality of battery cells, a barrier, and a housing case configured to accommodate the plurality of cells and at least one first barrier and at least one second barrier. The first and second barrier may each comprise an exterior comprising an endothermic material, and the endothermic material may comprise a hydrogel comprising a polymer and water.

FIG. 1

EP 4 779 778 A1

**Description**

BACKGROUND OF THE INVENTION

1. Field

The present disclosure relates to a battery assembly.

2. Description of the Related Art

A secondary battery may be a battery configured to convert electrical energy into chemical energy to store the chemical energy and may be reused multiple times through charging and discharging. To obtain desired output and performance, a plurality of secondary batteries may be grouped to manufacture a battery assembly for use. Such a battery assembly may comprise a plurality of secondary batteries, i.e., a plurality of battery cells in an internal space of the housing case as described above.

When a thermal runaway event occurs in one of the battery cells disposed in the battery assembly, heat, flames, and/or high temperature/high-pressure gases generated in the cells may easily propagate to adjacent cells. In such a case, a fatal safety issue may occur due to characteristics of the secondary batteries. When such a thermal runaway event occurs, to suppress or delay the thermal runaway phenomenon, an approach of inserting an interruptible member into a path along which heat, flames, and/or high-temperature/high-pressure gases move is being attempted.

SUMMARY OF THE INVENTION

An object of the present disclosure is to provide a barrier that stably absorbs heat even when being in contact with heat and/or high-temperature/high-pressure gases and furthermore suppresses contacted flame, is chemically stable, and is manufactured in various forms without structural restriction.

Another object of the present disclosure is to provide a battery assembly in which a thermal runaway phenomenon is effectively delayed or suppressed when a thermal runaway event occurs.

Further another object of the present disclosure is to provide a battery assembly having improved stability and structural stability.

The present disclosure may be widely applied in fields of electric vehicles, battery charging stations, energy storage systems (ESSs), and other green technologies such as photovoltaics and wind power utilizing batteries. In addition, the present disclosure may be used in eco-friendly mobility including electric vehicles and hybrid vehicles, in order to prevent a climate change by suppressing air pollution and greenhouse fluid emission.

A battery assembly according to the present disclosure may comprise: a plurality of battery cells; at least one first barrier; and a housing case configured to enclose the plurality of battery cells and the first barrier, wherein the first barrier comprise an exterior and an endothermic material enclosed in the exterior, and wherein the endothermic material comprises a hydrogel comprising a polymer and water.

In certain embodiments, the battery assembly comprises a plurality of first barriers, which are interposed (or alternatively stacked) between battery cells.

In the battery assembly according to an embodiment, at least a portion of the exterior has a melting point of about 80°C to about 120°C.

In the battery assembly according to an embodiment, the polymer may be a lithium-stable polymer.

In the battery assembly according to an embodiment, the polymer may comprise at least one selected from the group consisting of polyethylene glycol, polyvinylpyrrolidone, polyethyleneimine, polyacrylonitrile, polyvinyl alcohol, polyethylene oxide, polyacrylic acid, and polyacrylate; or comprises two or more copolymers thereof.

In the battery assembly according to an embodiment, the polymer comprises or consists of polyethylene glycol.

In the battery assembly according to an embodiment, the hydrogel comprises or consists of a cross-linking reaction product of polyethylene glycol diacrylate.

In the battery assembly according to an embodiment, the hydrogel comprises the polymer and water at a weight ratio of about 2:8 to about 9:1.

In the battery assembly according to an embodiment, the hydrogel comprises the polymer and water at a weight ratio of about 4:6 to about 6:4 with respect to the total weight of the hydrogel.

In certain embodiments, the battery assembly comprises a plurality of first barriers, which are interposed between battery cells. In the battery assembly according to an embodiment, the battery cells and the first barriers may be stacked in a preset stacking direction.

In the battery assembly according to an embodiment, the first barrier may have a thickness that is about 0.05 times to about 0.5 times the thickness of a battery cell within the plurality of battery cells.

In the battery assembly according to an embodiment, the first barrier may have a height that is lower than the height of a battery cell within the plurality of battery cells.

In the battery assembly according to an embodiment, the first barrier may have a weight in a range of about 15 g to about 200 g.

In the battery assembly according to an embodiment, the first barrier may absorb about 25 kJ to about 300 kJ of energy when heated from a temperature of about 25°C to about 100°C.

A battery assembly according to the present disclosure may comprise: a plurality of battery cells; at least one second barrier, and a housing case configured to enclose the plurality of battery cells and the second barrier, the housing case may comprise a housing body having an opening and a housing cover coupled to the housing body to cover the opening, wherein the second barrier is disposed between the plurality of battery cells and the housing cover, wherein the second barrier comprises an exterior and an endothermic material enclosed in the exterior, and wherein the endothermic material comprises a hydrogel comprising a polymer and water.

In the battery assembly according to an embodiment, the second barrier may comprise a plurality of grooves, wherein at least a portion of the plurality of battery cells may be inserted into at least a portion of the plurality of grooves.

In the battery assembly according to an embodiment, the plurality of grooves may be oriented in the same direction.

In the battery assembly according to an embodiment, a unit the second barrier may have a weight in a range of about 15 g to about 85 g.

In the battery assembly according to an embodiment, a unit endothermic amount of the second barrier absorbs about 25 kJ to about 120 kJ when subjected to a temperature of about 25°C to about 100°C.

In the battery assembly according to an embodiment, the battery assembly may further comprise a busbar assembly including a busbar electrically connected to the plurality of battery cells and a busbar frame configured to support the busbar, wherein the second barrier may be disposed between the plurality of battery cells and the busbar assembly.

In the battery assembly according to an embodiment, the plurality of battery cells and the first barrier may be stacked in a preset stacking direction, and the housing case may comprise a housing body having an opening and a housing cover coupled to the housing body to cover the opening, wherein a second barrier is disposed between the plurality of battery cells and the housing cover.

In certain embodiments, the battery assembly comprises a plurality of first barriers, which are interposed between battery cells and a plurality of second barriers, each of which are disposed between those battery cells adjacent to the housing cover and the housing cover.

BRIEF DESCRIPTION OF THE DRAWINGS

Fig. 1 is an exploded view illustrating an example of a battery assembly according to an embodiment of the present disclosure.

Fig. 2 is a schematic view illustrating an example of a structure of a barrier according to an embodiment of the present disclosure.

Fig. 3 is a view illustrating an example of a battery cell according to an embodiment of the present disclosure.

Fig. 4 is a view illustrating an example in which the battery cell and a plurality of first barriers are stacked according to an embodiment of the present disclosure.

Fig. 5 is a view illustrating an example of a second barrier according to an embodiment of the present disclosure.

Fig. 6 is a view illustrating an example of an arrangement of a plurality of battery cells and a second barrier according to an embodiment of the present disclosure.

Fig. 7 is a view illustrating an example in which a plurality of battery cells, a plurality of first barriers, and a second barrier are disposed inside a housing case.

Fig. 8 is a view in an X-direction of Fig. 7, illustrating an embodiment in which a battery cell, a first barrier, and a second barrier are disposed inside a housing case.

Fig. 9 is a view illustrating another example of the battery assembly according to an embodiment of the present disclosure.

Fig. 10 is a schematic view depicting an arrangement of a battery cell and a barrier in a simulation as described in the Examples.

Fig. 11 is a graph illustrating a change in battery cell temperature over time under a normal discharge conditions in the simulations of the Example and Comparative Examples.

Fig. 12 is a graph illustrating a change in battery cell temperature over time under a thermal runaway situation in the simulations of the Example and Comparative Examples.

Fig. 13 is a photograph illustrating an experimental example in which each of an endothermic material set in the Example and an endothermic material set in Comparative Example 3 react with a lithium metal.

DETAILED DESCRIPTION

The embodiments described herein may be modified in various other ways, and thus the technology according to an embodiment is not limited to embodiments described below. Furthermore, throughout the specification, the use of the words "comprises", "provided with", "contains", or "has" does not exclude other elements, but rather indicates that other elements may be added, and also, these terms do not exclude elements, materials, or processes that are not additionally listed.

The use of the terms such as 'first, second, and third" in front of any components in this specification is only to avoid confusion about the components to which they are referred, as well as has nothing to do with the order, importance, or master-slave relationship between the components. For example, it is also possible to implement an invention that comprises only a second component without a first component.

In this specification, an "X direction", a "Y direction", and a "Z direction" may be described with reference to a space rectangular coordinate system defined by an X-axis, a Y-axis, and a Z-axis that are orthogonal to each other. Unless otherwise specified, the Z-direction (or third direction) may refer to a height direction, the X-direction (or first direction) may refer to anyone of directions perpendicular to the height direction, and the Y-direction (or second direction) may refer to a direction perpendicular to both the Z-direction and the X-direction. However, the X-direction, the Y-direction, and the Z-direction mentioned below are for the purpose of providing clear descriptions for better understanding of the present disclosure. It is of course possible to differently define these directions depending on where the reference point is set.

In this specification, "electrically connected" may refer to all methods of connection that allow multiple objects to electrically communicate with each other without limitation and may be implemented in various manners, such as direct connection between the multiple objects to be connected to each other or connection using a third object as a medium.

In this specification, the term "... part" may refer to one single component or to an unlimited combination of two or more identical/similar components that share common features in terms of functionality, and combination of the components may be constituted by hardware and/or software, without limitation.

In this specification, "disposed" may refer to an unlimited number of a positional relationship in which one object is disposed adjacent to another object. As an non-limiting example, it may mean coating one object on another object, adhering one object to another object using an adhesive material as a medium, attaching the objects by applying heat, a pressure, etc., or simply positioning or fixing at least a portion of one object so that at least a portion of one object is in contact with at least a portion of another object within any given space.

In this specification, when one object is said to "cover" another object, it may refer to any functional, compositional, or structural relationship in which one object is at least adjacent to the other object, thereby blocking or mitigating any external factor that is applied to the other object, or blocking or mitigating any factor applied from the other object from being applied externally.

The term "secondary battery" as used herein may refer to a battery that generates electrical energy through oxidation and reduction reactions when ions, specifically cations such as lithium ions, are inserted into and removed from positive and negative electrodes thereof. In detail, the "secondary battery" may represent any one of a lithium cobalt battery, a lithium hydride battery, a lithium iron phosphate battery, a lithium ion battery, a lithium polymer battery, a lithium sulfur battery, a nickel hydrogen battery, a nickel cadmium battery, a sodium battery, and an all-solid-state battery. For example, the term "secondary battery" used herein may refer to a lithium ion secondary battery, but is not necessarily limited thereto.

The term "battery assembly" used herein may be a general concept referring to a battery module or a battery pack. Thus, the battery assembly according to the present disclosure may refer not only to a battery module but also to a battery pack that includes a plurality of battery cells without including a battery module structure, such as a cell to pack (hereinafter, referred to as a "CTP").

The term "battery cell" as used herein may refer to a radical unit of the secondary battery capable of charging and discharging electrical energy, which comprises an electrode assembly, an electrolyte, and an exterior.

Hereinafter, the present disclosure will be described in detail. However, this is merely illustrative, and the present disclosure is not limited to a specific embodiment illustrated as an example of the present disclosure.

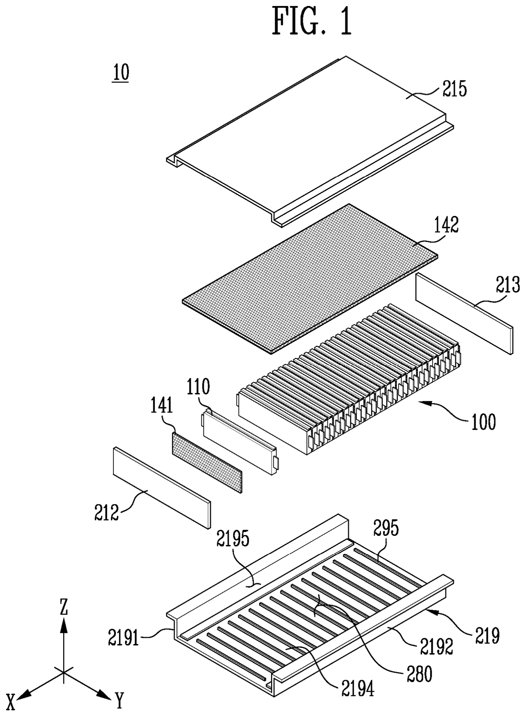

Fig. 1 is an exploded view illustrating an example of a battery assembly according to an embodiment of the present disclosure.

A battery assembly 10 according to an example of the present disclosure comprises a plurality of battery cells 110, first and second barriers 141 and 142, and a housing case 200 that accommodates or encloses the plurality of battery cells 110 and the first and second barriers 141 and 142. The first and second barriers 141 and 142 may comprise an exterior comprising an endothermic material, wherein the endothermic material may comprise a hydrogel, which, in turn, comprises a polymer and water.

Fig. 1 illustrates an example of the battery assembly 10 according to an embodiment of the present disclosure.

However, the battery assembly 10 is not necessarily limited to that illustrated in Fig. 1, and also, the battery assembly 10 is not limited to detailed forms and shapes of the illustrated various components without departing from the scope of the present disclosure. The same may be applied to all the following drawings.

In the event that a thermal runaway event occurs in the battery assembly 10 due to factors such as short circuit or degradation of at least one of the plurality of battery cells 110 included in the battery assembly 10, flame, heat, and/or high-temperature/high-pressure gases generated from at least one of the plurality of battery cells 110 may be rapidly propagated to adjacent other battery cells 110 or other components through an empty space present in the battery assembly 10, specifically, in a housing case 200. Alternatively, due to heat convection phenomena, etc., the flame may spread more rapidly to adjacent other battery cells 110 or other components.

The first and second barriers 141 and 142 according to an embodiment may stably absorb heat even when being in contact with the flame, the heat, and/or the high-temperature/high-pressure gases to minimize the heat propagation, and furthermore, the first and second barriers may suppress the contacted flame. According to an embodiment, in spite of such the effects, the first and second barriers 141 and 142 may be chemically stable, and thus, the first and second barriers 141 and 142 may not chemically react with compositions of other components included in the battery assembly 10, thereby stably delaying and suppressing the thermal runaway event.

For this, the first and second barriers 141 and 142 according to an embodiment may be disposed in the housing case 200 together with the battery cell 110 that serves as a starting point of fire in the battery assembly 10 and may be disposed to be in contact with or be adjacent to at least a portion of the battery cell 110 and/or other components disposed in the housing case 200.

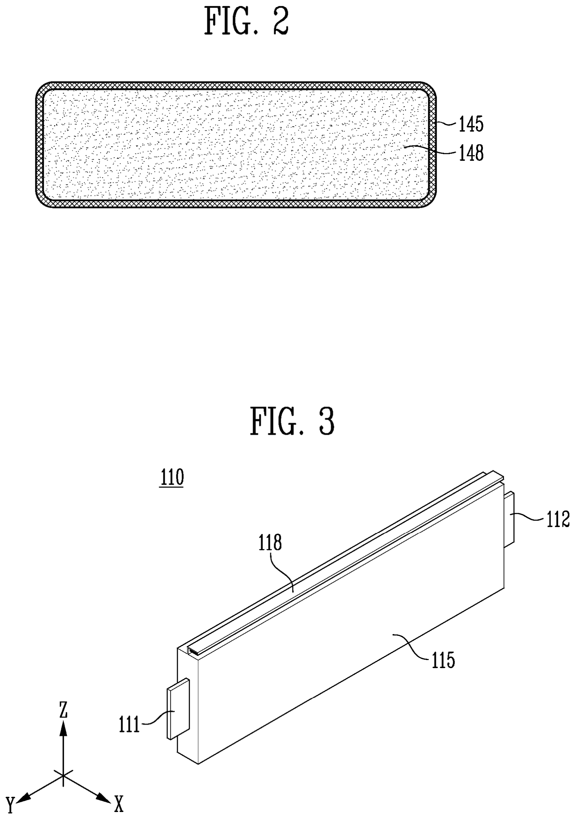

Fig. 2 is a schematic view illustrating an example of a structure of the first and second barrier according to an embodiment of the present disclosure.

Referring to Fig. 2, in an embodiment, each of the first and second barriers 141 and 142 may independently comprise an exterior 145 comprising an endothermic material 148.

In an embodiment, the exterior 145 may comprise an endothermic material 148. The exterior 145 may maintain a certain shape of each of the first and second barriers 141 and 142 regardless of the form of the endothermic material 148. For example, even if the endothermic material 148 contains a fluid or is composed of a fluid, each of the first and second barriers 141 and 142 may maintain its preset three-dimensional shape due to the exterior 145.

The exterior 145 may be sealed so that the endothermic material 148 is not exposed to the outside under a normal operating conditions. Thus, the endothermic material 148 is not be exposed to the outside under the normal operating conditions.

Fig. 2 schematically illustrates an example of the structure of the first and second barriers 141 and 142 according to an embodiment of the present disclosure. However, this is for convenience of description only, and various forms, shapes, sizes, etc., may be configured in various manners as necessary, except for details specifically defined when describing example distinguished by an insertion position as described below.

In an exemplary embodiment, the exterior 145 may be configured in the form of a pouch. In the case of the pouch-shaped exterior 145, the exterior 145 may be provided with a single internal space or a plurality of isolated internal spaces, and the endothermic material 148 may be disposed in the internal space or the internal spaces.

In an exemplary embodiment, the exterior 145 may be configured in the form of a plate having a certain thickness. In the case of the plate-shaped exterior material 145, similarly, the single internal space or the plurality of isolated internal spaces may be provided, and the endothermic material 148 may be disposed in the internal space or the internal spaces.

In an exemplary embodiment, the exterior 145 may be configured in the form of a capsule. In the case of the exterior 145 having the form of the capsule, the exterior 145 may have a coreshell structure in which the exterior 145 surrounds a core together with a shell by using the endothermic material 148 as the core. When the exterior 145 is configured in the form of a capsule, each of the first and second barriers 141 and 142 may independently take the form of a single capsule comprising the endothermic material 148 or may be configured such that a plurality of capsules comprising the endothermic material 148 are included in an additional exterior.

In an embodiment, the exterior 145 may start to melt when reaching a certain temperature. In a specific embodiment, the exterior 145 may be manufactured so that at least a portion thereof melts when being in contact with flame, heat, and/or high temperature/high pressure gases generated from at least one of the plurality of battery cells 110 during a thermal runaway event in a battery assembly 10.

In an embodiment, at least a portion of the exterior 145 may melt at a temperature (i.e., have a melting point) of about 80°C to about 120°C. In a specific embodiment, at least a portion of the exterior 145 may melt at a temperature of about 80°C to about 120°C, which may cause the endothermic material 148 to migrate to the outside.

In other words, in an embodiment, the exterior 145 may not melt or undergo any change in shape or form until reaching the above-described temperature. Thus, until the above-described temperature is reached, the endothermic material 148 remains contained within the exterior 145 and is not to be exposed to the outside.

According to an exemplary embodiment, the exterior 145 may comprise a polymer such as polyethylene (PE), polypropylene (PP), rubber, cellulose, or resin.

Referring again to Fig. 2, in an embodiment, the exterior 145 comprises an endothermic material 148. As described above, the endothermic material 148 may be sealed within the exterior 145 so as not to be exposed to the outside under normal operating conditions.

In an embodiment, the endothermic material 148 may comprise a hydrogel comprising a polymer and water. In an exemplary embodiment, the endothermic material 148 may be consist of a hydrogel which comprises or consists of a polymer and water.

In an embodiment, the polymer may be a lithium-stable polymer.

In an exemplary embodiment, the term "lithium-stable" refers to a polymer that does not undergo a violent reaction when contacted with lithium. More specifically, a lithium-stable polymer may refer to a polymer that does not exhibit a visible reaction when contacted with lithium. More specifically, the lithium-stable polymer may refer to a polymer that does not undergo any measurable reaction when contacted with lithium.

In an exemplary embodiment, the polymer may be a lithium-stable polymer and may also be a polymer that exhibits stable properties (i.e., no significant reaction occurs) when in contact with compositions in a positive electrode, a negative electrode, and/or an electrolyte.

In an embodiment, the polymer may comprise at least one selected from the group consisting of polyethylene glycol (PEG), polyvinylpyrrolidone (PVP), polyethyleneimine (PEI), polyacrylonitrile (PAN), polyvinyl alcohol (PVA), polyethylene oxide (PEO), polyacrylic acid (PAA), and polyacrylate; or two or more copolymers of thereof.

In an embodiment, the polymer may be polyethylene glycol.

In an embodiment, the endothermic material 148 may comprise the polymer and the water. As described above, the polymer may be a lithium-stable polymer.

Thus, the endothermic material 148 may exhibit excellent endothermic properties and simultaneously may be chemically stable so as not to chemically react with the compositions of other components included in the battery assembly 10, thereby stably delaying and suppressing the thermal runaway event.

Water may have high specific heat and latent heat and thus may be appropriately used as an endothermic material. However, each component constituting the battery assembly 10 may contain a large amount of lithium or a compound containing lithium.

When lithium is in contact with water, lithium may undergo a chemical reaction that is accompanied by heat generation due to its high reactivity. In particular, when purity of lithium contained therein is high (such as a lithium metal), lithium may be accompanied by a very intense exothermic reaction even upon the contact with water. In particular, when lithium is in contact with water, lithium may generate flammable gases such as $H_2$ while producing lithium oxides ($Li_xO_y$) and/or lithium hydroxides (LiOH), and this process may be accompanied by intense heat generation. Thus, if water is used as a heat absorber in the battery assembly 10, it may cause fatal safety issues.

In an embodiment, the endothermic material 148 may comprise the above-described polymer and water. The polymer may be a lithium-stable polymer. Thus, since the endothermic material 148 comprises the polymer and water, no particular reaction may occur even when being in contact with lithium. Thus, when used as the first and second barriers 141 and 142, improved safety may be ensured.

In an embodiment, as described above, the endothermic material 148 may comprise hydrogel containing the polymer and water. In detail, as described above, the endothermic material 148 may be composed of hydrogel containing the polymer and water. The endothermic material 148, which is composed of hydrogel, may be manufactured in various forms to minimize structural restriction on the first and second barriers 141 and 142. As a result, the first and second barriers 141 and 142 may be disposed in various spaces defined within the battery assembly 10 to more effectively delay and suppress the thermal runaway event.

In an embodiment, the hydrogel may be a cross-linking reaction product of polyethylene glycol diacrylate (PEGDA). For example, PEGDA may be crosslinked using free-radical polymerization, such as by contacting the PEGDA with UV light. One of ordinary skill in the art will be familiar with methods for preparing a hydrogel from PEGDA.

In a specific embodiment, the hydrogel may be formed by a step of preparing a mixture of polyethylene glycol diacrylate, water, and an initiator, and a step of inducing cross-linking of the mixture.

In an embodiment, light may be irradiated onto the mixture to induce the cross-linking. In an embodiment, ultraviolet light having a wavelength of about 300 nm to about 400 nm may be irradiated to induce the cross-linking by photopolymerization, but is not necessarily limited thereto.

In an embodiment, the initiator may be used without limitation as long as it is capable of inducing the cross-linking by the photopolymerization. For example, examples of the initiator may include acyl phosphine such as 2-hydroxy-2-methyl-1-phenylpropan-1-one (HMPP), benzoin ether, dialkyl acetophenone, hydroxyl alkylketone, phenyl glyoxylate, benzyl dimethyl ketal, and 2,4,6-trimethyl-benzoyl-trimethyl phosphine oxide, and α-aminoketone.

In an embodiment, the hydrogel comprises the polymer and water at a weight ratio of about 2:8 to about 9:1. In other words, a hydrogel may comprise from about 20% w/w polymer (and about 80% water) to about 90% w/w polymer (and about 10% water).

In a specific embodiment, the hydrogel comprises the polymer and water a weight ratio of about 2.5:7.5 (e.g.,

about 27% w/w polymer and about 73% water), a weight ratio of about 3:7, a weight ratio of about 3.5:6.5, a weight ratio of about 4:6, a weight ratio of about 6:4, a weight ratio of about 6.5:3.5, a weight ratio of about 7:3, a weight ratio of about 7.5:2.5, a weight ratio of about 8:2, a weight ratio of about 8.5:1.5, or a weight ratio of about 9:1. In other words, a hydrogel may comprise from about 27% w/w polymer (and about 73% water) to about 90% w/w polymer (and about 10% water).

If water is present in an amount less than the above-described numerical range, the endothermic performance of the first and second barriers 141 and 142 may be degraded. If water is present in an amount exceeding the above-described numerical range, it may be difficult to ensure safety if the hydrogel should come into contact with lithium.

In an embodiment, the hydrogel comprises the polymer and at a weight ratio of about 4:6 to about 6:4.

In a specific embodiment, the hydrogel comprises the polymer and water at a weight ratio of about 4.5:5.5, about 5:5, or about 5.5:4.5.

Since the hydrogel contains the polymer and water within the above-described numerical range, it may be even more advantageous when considering both the endothermic performance and the safety when being in contact with lithium.

According to the above-described embodiment, the first barrier 141 and second barrier 142 according to an embodiment may stably absorb heat even when being in contact with the flame, the heat, and/or the high-temperature/high-pressure gases to minimize heat propagation, and furthermore, the first and second barriers may suppress the contacted flame. According to an embodiment, in spite of such the effects, the first and second barriers 141 and 142 may be chemically stable, and thus, the first and second barrier 141 and 142 may not chemically react with the compositions of other components included in the battery assembly 10 to stably delay and suppress the thermal runaway events, and furthermore, since an influence due to the structural restriction is minimized, the first and second barriers 141 and 142 may be disposed in various spaces defined within the battery assembly 10 to more effectively delay and suppress the thermal runaway event.

An example of the first and second barrier 141 and 142 has been disclosed above. As described below, the first and second barriers 141 and 142 may each be provided in plurality, each of which have different forms and characteristics depending on their insertion positions. Thus, the above-disclosed example may be applied to both the first barrier 141 and the second barrier 142 and disclose an example of each of the first and second barriers 141 and 142 that may be included within the battery assembly 10.

Fig. 3 is a view illustrating an example of the battery cell according to an embodiment of the present disclosure.

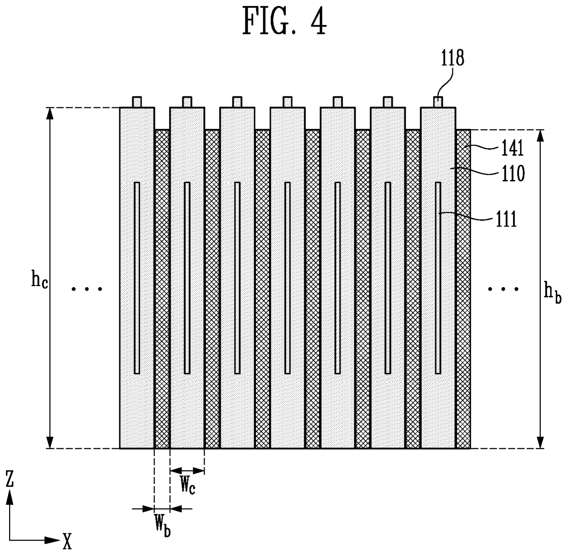

Fig. 4 is a view illustrating an example of in which the battery cell and the first barrier are stacked according to an embodiment of the present disclosure.

Referring to Fig. 1, in an embodiment, the plurality of battery cells 110 and one or more of the first barriers 141 may be stacked in a preset stacking direction. For example, with reference to Fig. 1, the stacking direction may represent a direction parallel to the X direction. The second barrier 142 may be positioned between the stacked battery cells and first barriers and a component of the housing case, for example, the housing cover 215.

The plurality of battery cells 110 and one or more of the first barriers 141 may be stacked in the preset stacking direction as described above to provide a battery cell stack 100.

In an embodiment, each of the battery cells 110 may have a thickness of about 3 mm to about 20 mm independently. In a specific embodiment, the thickness of each of the battery cells 110 may be independently about 4 mm or more, about 5 mm or more, about 7 mm or more, or about 9 mm or more, or about 19 mm or less, about 18 mm or less, about 17 mm or less, about 16 mm or less, or about 15 mm or less. In an exemplary embodiment, the thickness of each of the battery cells 110 may be about 10 mm, but is not necessarily limited thereto.

The thickness may refer to a length (or width) in a direction parallel to the X-direction, for example, based on the illustration of Fig. 1.

Referring to Fig. 3, in an embodiment, each of battery cells 110 may comprise a cell case 115, into which an electrode assembly (not shown) can be disposed, and which generates or stores electrical energy. The electrode assembly may comprise lead tabs 111 and 112 that protrude from the cell case 115 to the outside of the cell case 115. The cell case 115 may comprise the electrode assembly (not shown) that is electrically connected to the lead tabs 111 and 112 in its inner space and generate and store electrical energy therein. For example, with reference to Figs. 1 and 3, the lead tabs 111 and 112 may protrude in a direction parallel to the Y direction.

In an embodiment, the electrode assembly (not shown) may comprise a positive electrode (cathode) and a negative electrode (anode).

According to an exemplary embodiment, referring to Fig. 3, the cell case may be in the form of a film-type exterior, and at least a portion thereof may be in the form of a sealed pouch. That is, the battery cell 110 may be a pouch-type battery cell. However, this is merely an example, and the battery cell 110 may also be a prismatic or cylindrical battery cell.

Referring to Fig. 3, in an embodiment, each of the battery cells 110 may comprise a folding part 118 provided in a direction in which a cell case 115 crosses the protrusion direction of each of the lead tabs 111 and 112. For example, with reference to Figs. 1 and 3, the folding part 118 may be provided in a direction parallel to the Z-direction, specifically, in a direction parallel to a +Z-direction.

In an exemplary embodiment, the plurality of battery cells 110 may be stacked in the cell case so that all the folding parts 118 are provided in the same direction. As illustrated in Figs. 1 and 3, all the folding parts 118 may be stacked in the +Z direction.

The folding part 118 may be bent at least once. A direction in which the folding part 118 is initially bent may be independent for each battery cell 110.

Referring to Fig. 4, as described above, the plurality of battery cells 110 and one or more first barriers 141 may be stacked in a preset stacking direction to provide the battery cell stack 100.

In such an embodiment, the one or more first and second barriers 141 and 142 may be provided within the battery assembly 10.

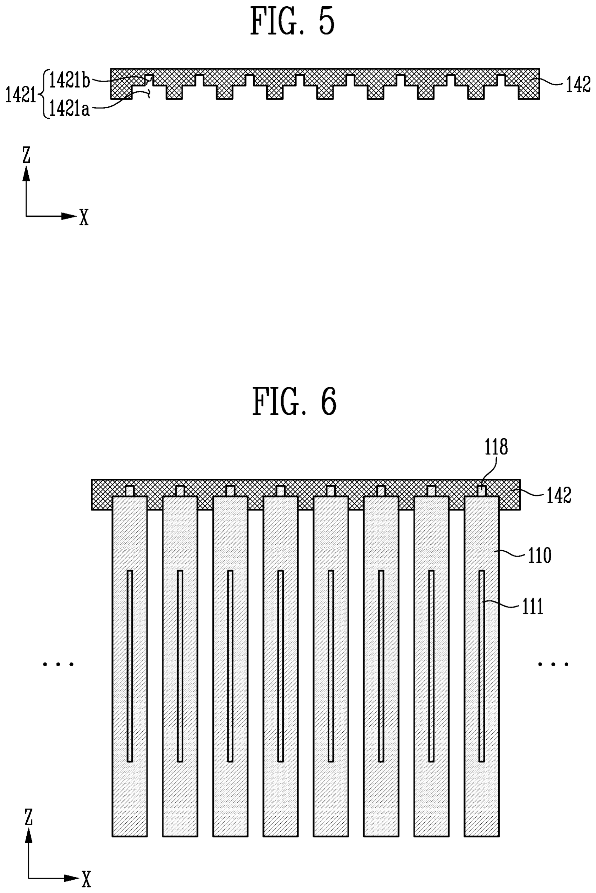

The first barrier 141 may be provided in plurality. Referring to Fig. 1 and also to Fig. 6 described below, the first barrier 141 provided in plurality may be disposed to be inserted between at least one pair of adjacent battery cells 110 of the plurality of battery cells 110.

In Figs. 1 and 4 and Fig. 6 described below, one battery cell 110 and one first barrier 141 may be alternately disposed for convenience of description, but this is not necessarily limited thereto. The one battery cell 110 and the one first barrier 141 may be disposed in various manners depending on desired thermal runaway delay performance, suppression performance, and Logical configuration. For example, one first barrier 141 may be disposed for every two battery cells 110, one first barrier 141 may be disposed for every three battery cells 110, or one first barrier 141 may be disposed for every four battery cells 110.

In an exemplary embodiment, the "Logical" may refer to a unit of the battery cell configuration that is arbitrarily set according to user request, and may be defined in various manners as described above as necessary.

Referring to Fig. 4, in an embodiment, a thickness $w_b$ of the first barrier 141 may be about 0.05 times to about 0.5 times a thickness $w_c$ of the battery cell 110.

When the value is lower than the above-described numerical range, endothermic performance or heat dissipation performance of the first and second barrier 141 and 142 may be degraded, and when the value exceeds the above-described numerical range, an energy density per unit volume may be degraded.

The thickness $w_b$ of the first barrier 141 may refer to, for example, a length (or width) in a direction parallel to the X-direction, based on the illustration of Fig. 1 or Fig. 4.

Referring again to Fig. 4, in an embodiment, a height $h_b$ of the first barrier 141 may be less than a height $h_c$ of the battery cell 110.

Since the height $h_b$ of the first barrier 141 is lower than the height $h_c$ of the battery cell 110, when the battery cell stack 100 is viewed from above, a region in which the first barrier 141 is disposed may provide a type of groove. That is, when viewing the battery cell stack 100 from the +Z direction with reference to Figs. 1 or 4, a groove may be defined in the region in which the first barrier 141 is disposed.

As described above, since the height of the first barrier $h_b$ is lower than the height $h_c$ of the battery cell 110, when the battery cell stack 100 is viewed from above, a groove may be defined in the region in which the first barrier 141 is disposed. Therefore, as described below, when the second barrier 142 including a plurality of grooves is configured to support the battery cell stack 100 on one surface thereof, at least some of the battery cells 110 constituting the stack 100 may be inserted into the plurality of grooves to further improve the structural stability of the battery assembly 10.

In an embodiment, the first barrier 141 may have a weight in a range from about 15 g to about 200 g.

In a specific embodiment, the weight of the first barrier 141 may be about 16 g or more, about 17 g or more, about 18 g or more, about 19 g or more, or about 20 g or more, or may be about 200 g or less, about 199 g or less, about 198 g or less, about 196 g or less, about 195 g or less, or about 193 g or less.

In an embodiment, the first barrier 141 may comprise the endothermic material 148 in a weight range of from about 14 g to about 198 g.

In a specific embodiment, the endothermic material 148 may be included in the first barrier at a weight of about 15 g or more, about 16 g or more, about 17 g or more, about 18 g or more, or about 19 g or more, or may be about 197 g or less, about 195 g or less, about 194 g or less, about 193 g or less, or about 192 g or less.

The above-described weight may refer to an individual weight of each of the first barriers 141 or a weight of the endothermic material 148 in each of a plurality of first barriers 141.

When the weight of a first barrier is lower the above-described numerical range, the endothermic performance or the heat dissipation performance of the first barrier 141 may be degraded, and when the value exceeds the above-described numerical range, the energy density per unit volume or per unit weight may be degraded.

In an embodiment, the first barrier 141 may absorb about 25 kJ to about 300 kJ of energy when heated from a temperature of about 25°C to about 100°C. That is, a thermal analysis (e.g., differential scanning calorimetry) may be performed on the first barrier by heating a sample of the first barrier from about 25°C to about 100°C and measuring the amount of energy absorbed.

In a specific embodiment, the amount of energy absorbed by the first barrier may be about 25.3 kJ or more, about 25.5 kJ or more, about 25.8 kJ or more, about 26 kJ or more, about 26.5 kJ or more, about 26.8 kJ or more, about 27 kJ or more, or about 27.5 kJ or more, or about 298 kJ or less, about 295 kJ or less, about 290 kJ or less, about 287 kJ or less, about 284 kJ or less, or about 282 kJ or less.

In an exemplary embodiment, the amount of energy absorbed may be calculated from theoretical specific heat and latent heat of the polymer and water in the endothermic material 148. For example, the endothermic amount Q may be calculated by Equation 1 below.

[Equation 1]

$$Q(kJ) = \{(C_p \times m_p \times \triangle T) + (C_w \times m_w \times \triangle T)\} + \{(H_p \times m_p) + (H_w \times m_w)\}$$

In Equation 1, $C_p$ is a specific heat capacity of the polymer (kJ/kg·K), $C_w$ is a specific heat capacity of water (kJ/kg·K), mp is a mass of the polymer in the endothermic material (kg), $m_w$ is a mass of water in the endothermic material (kg), $H_p$ is vaporization latent heat of the polymer (kJ/kg), $H_w$ is vaporization latent heat of water (kJ/kg), and $\triangle T$ is an endothermic reference temperature K.

In Equation 1 above, the endothermic reference temperature may be about 75 K as described above.

Within the above-described numerical ranges, the endothermic performance and/or combustion performance of the first barrier 141 may be excellent, and a loss of energy density per unit volume and per unit weight may be minimized.

Within the above-described numerical ranges, the endothermic performance and/or fire extinguishing performance of the first barrier 141 may against flame, heat, and/or gas propagating in the stacking direction of the battery cells 110 may be excellent to minimize or suppress propagation to adjacent battery cells 110. When constructing the battery cell stack 100, the loss of energy density per unit volume and per unit weight may be minimized.

Due to continuous use of the battery, swelling may occur in one of the battery cells 110. Alternatively, at least one of the battery cells 110 in which the thermal runaway event occurs to start ignition and the battery cell 110 in which heat transfer occurs may be expanded, resulting in a change in volume of the battery cell 110 included in the battery assembly 10. As described above, the first barrier 141 may include hydrogel therein to effectively reduce a surface pressure. Thus, mechanical rigidity and stability of the battery assembly 10 including the battery cell stack 100 provided with the first barrier 141 may be effectively secured.

Referring again to Fig. 1, in an embodiment, the housing case 200 may accommodate or enclose the plurality of battery cells 110 and the first and second barriers 141 and 142. In a specific embodiment, the housing case 200 may accommodate the battery cell stack 100 as described above. In other words, in an embodiment, the plurality of battery cells 110 and the first and second barriers 141 and 142 may be accommodated in the housing case 200. The housing case 200 may be configured to protect objects therein, e.g., the plurality of battery cells 110 and the first and second barriers 141 and 142, which are accommodated in the housing case 200, from an external impact such as vibration.

Although described below, the housing case 200 may accommodate the plurality of battery cells 110, the first and second barriers 141 and 142, and a busbar assembly 300, which comprises a busbar electrically connected to the plurality of battery cells 110. The detailed descriptions thereof will be described later.

Referring again to Fig. 1, in an embodiment, the housing case 200 may comprise a housing body 219 comprising a housing space 280 having an opening, wherein the plurality of battery cells 110 and the first and second barriers 141 and 142 are disposed in the housing space 280, and a housing cover 215 coupled to the housing body 219 to cover the opening.

Referring to Fig. 1, in an embodiment, the housing body 219 may have a shape of a cube or a rectangular parallelepiped with the opening as described above.

In a specific embodiment, the housing body 219 may comprise a body bottom surface 2194 defining a bottom surface of the internal space 280, one or more body side surfaces 2191 and 2192 extending from edges (not shown) of the body bottom surface 2194, which are disposed side by side in the stacking direction, in the first direction on edges of the body bottom surface 2194, and one or more endplates 212 and 213 provided at both ends of the stack of the plurality of battery cells 110 in the stacking direction.

Referring to Fig. 1 and also to Fig. 6 described below, in an embodiment, the housing cover 215 may be coupled to the housing body 219 to cover the opening of the housing body 219. In an embodiment, the housing cover 215 may define the internal space 280 together with the housing body 219. As described above, the housing cover 215 may define the housing case 200 together with the housing body 219.

Referring to Fig. 1 and Fig. 6 described below together, in an embodiment, a heat dissipation member 295 may be provided on the body bottom surface 2194. A material having relatively high thermal conductivity and adhesiveness may be used for the heat dissipation member 295. The material may attach and fix the battery cell 110 to the body bottom surface 2194 and simultaneously may rapidly dissipate heat generated from the battery cell 110 in the direction of the body bottom surface 2194.

Referring again to Fig. 1, in an embodiment, a second barrier 142 may be disposed between the plurality of battery cells 110 and the housing cover 215. In such an embodiment, the housing case 200 may comprise a housing body 219 having an opening, and a housing cover 215 coupled to the housing body 219 to cover the opening, and the second barrier 142 may be disposed between the plurality of battery cells 110 and the housing cover 215.

In the above-described embodiment, the housing case 200 may comprise the housing body 219 having the opening, and the housing cover 215 coupled to the housing body 219 to cover the opening, and the second barrier 142 may be disposed between the plurality of battery cells 110 and the housing cover 215.

In such an embodiment, the one or more first and second barriers 141 and 142 may be provided within the battery assembly 10. The second barrier 142 may be distinguished from the first barrier 141 by its insertion position (e.g., between a stack of battery cells and a component of the housing case) and a structural form associated therewith.

Referring to Fig. 1 together with Fig. 6 which will be described later, in this embodiment, the second barrier 142 may be disposed in the +Z direction with respect to the plurality of battery cells 110, specifically, the battery cell stack 100. In such an embodiment, referring to Fig. 1 together with Fig. 6 described below, the battery cell stack 100, the second barrier 142, and the housing cover 215 may be sequentially disposed along the +Z direction.

Fig. 5 is a view illustrating an example of the second barrier according to an embodiment of the present disclosure.

Fig. 6 is a view illustrating an example of an arrangement relationship between the battery cell and the second barrier according to an embodiment of the present disclosure.

Referring to Fig. 5, in an embodiment, the second barrier 142 may comprise a plurality of grooves 1421, and at least a portion of the plurality of battery cells 110 may be inserted into at least a portion of the plurality of grooves 1421.

Referring to Fig. 5, the second barrier 142 may comprise a plurality of grooves 1421. Each of the plurality of grooves 1421 may comprise, but is not necessarily limited to, a first groove 1421a that is adjacent to an opening and has a larger volume, and a second groove 1421b that is defined in a deep portion and has a smaller volume compared to the first groove 1421a.

**As** described above, the second barrier 142 may be disposed between the plurality of battery cells 110, specifically, between the battery cell stack 100 and the housing cover 215. At the above-described position, at least a portion of the plurality of battery cells 110 may be inserted into at least a portion of the plurality of grooves 1421.

Here, at least a portion of the main body of the battery cell 110 may be inserted into the first groove 1421a. Referring to Fig. 4, in relation to the thickness $w_c$ of each of the battery cells 110 as described above, a width of each of the first grooves 1421a may be independently about 3 mm to about 20 mm. The above-described width may refer to, for example, a length of the first groove 1421a in a direction parallel to the X-direction with reference to Fig. 5.

The folding part 118 provided on each of the battery cells 110 may be inserted into the second groove 1421b. Thus, with reference to Fig. 1 or 6, the second barrier 142 that is in contact with the battery cell 110 in the +Z direction may comprise a plurality of grooves 1421 having the first groove 1421a and the second groove 1421b as described above. Thus, the inserted battery cell 110 may be more effectively covered in one direction and thus may be more effectively supported, thereby improving structural stability.

Referring to Fig. 5, in an embodiment, the plurality of grooves 1421 may be opened or oriented in the same direction.

As described above, since at least some of the battery cells 110 are inserted into the plurality of grooves 1421 of the second barrier 142, the second barrier 142 may be in in contact with at least a portion of the plurality of battery cells 110. As described above, the second barrier 142 may be disposed between the plurality of battery cells 110 and the housing cover 215.

As illustrated in Fig. 1, the housing cover 215 may have a structure that comprises a substantially flat surface. Since the second barrier 142 is disposed between the plurality of battery cells 110 and the housing cover 215, the second barrier 142 may be disposed so that its flat surface faces the above-described direction.

Thus, since all of the plurality of grooves 1421 are oriented in the same direction, a portion that is in contact with the battery cell 110 may more effectively cover or support the plurality of battery cells in one direction due to the groove formation structure, and also, a portion that is not in contact with the battery cell 110 may not comprise the groove formation structure to further improve the structural stability.

In an embodiment, a unit of the second barrier 142 may have a weight of about 15 g to about 85 g. In a specific embodiment, the weight of each of the units of the second barrier 142 may independently be about 16 g or more, about 17 g or more, about 18 g or more, about 19 g or more, or about 20 g or more, or may be about 84 g or less, about 83 g or less, about 82 g or less, about 81 g or less, about 80 g or less, or about 79 g or less. In an embodiment, the unit weight of the second barrier 142 may be calculated by dividing the total weight of the second barrier 142 by the number of battery cells 110 that are in contact with the second barrier 142.

In an embodiment, a unit of the second barrier 142 may weigh about 25 g to about 45 g.

In a specific embodiment, each unit of the second barrier 142 may weigh about 28 g or more, about 30 g or more, about 32 g or more, about 34 g or more, or about 36 g or more, or may be about 44 g or less, about 43 g or less, about 42 g or less, about 41 g or less, about 40 g or less, or about 39 g or less.

In an embodiment, the endothermic material 148 may be included in the second barrier 142 at a unit weight of ranging from about 15 g to about 85 g. In a specific embodiment, the unit weight of the endothermic material in the second barrier may range from about 25 g to about 45 g. In an embodiment, the unit weight of the endothermic material 148 in the second barrier may be calculated by dividing the total weight of the endothermic material 148 in the second barrier 142 by the number of battery cells 110 that are in contact with the second barrier 142.

In a specific embodiment, the endothermic material 148 may be included in the second barrier 142 at a unit weight of about 25 g or more, about 28 g or more, about 30 g or more, about 33 g or more, or about 36 g or more, or may be about 42 g or less, about 41 g or less, about 40 g or less, or about 39 g or less.

When the value is lower the above-described numerical range, the endothermic performance or the heat dissipation performance of the second barrier 142 may be degraded, and when the value exceeds the above-described numerical range, the energy density per unit volume or per unit weight may be degraded.

In an embodiment, a unit of second barrier (i.e., the total amount of second barrier divided by the number of battery cells contacting the second barrier) absorbs about 25 kJ to about 120 kJ of energy when heated from a temperature of about 25°C to about 100°C. In a specific embodiment, a unit of second barrier may absorb about 25.3 kJ or more, about 25.5 kJ or more, about 25.8 kJ or more, about 26 kJ or more, about 26.5 kJ or more, about 26.8 kJ or more, about 27 kJ or more, or about 27.5 kJ or more, or about 119 kJ or less, about 118 kJ or less, about 117 kJ or less, about 116 kJ or less, about 115 kJ or less, or about 114 kJ or less. In an embodiment, the amount of energy absorbed by a unit of second barrier may be obtained by dividing the energy absorbed by the second barrier 142 by the number of battery cells 110 that are in contact with the second barrier 142.

In an embodiment, a unit of second barrier 142 absorbs about 35 kJ to about 80 kJ of energy when heated from a temperature of about 25°C to about 100°C.

In a specific embodiment, the amount of energy absorbed by a unit of the second barrier may be about 40 kJ or more, about 45 kJ or more, about 47 kJ or more, about 50 kJ or more, about 52 kJ or more, about 53.5 kJ or more, about 54 kJ or more, or about 55.5 kJ or more, or about 76 kJ or less, about 70 kJ or less, about 67 kJ or less, about 62 kJ or less, about 60 kJ or less, or about 57 kJ or less.

In an exemplary embodiment, the energy absorbed by a unit of second barrier may be calculated from theoretical specific heat and latent heat of the polymer and water in the endothermic material 148. For example, the total energy absorb ed may be calculated using Equation 1.

Due to the above-described numerical ranges and the structural features of the second barrier 142, the endothermic performance and/or fire extinguishing performance of the second barrier 142 with respect to flame, heat, and/or gas flowing upward (for example, in the +Z direction based on the illustration of Fig. 1 or Fig. 6) from the battery cell 110 at which ignition starts may be excellent to minimize or suppress propagation of the fire, heat, and/or gas to adjacent battery cells 110 or other components within the battery assembly 10, thereby effectively delaying progression of the thermal runaway event and furthermore stopping the event. Furthermore, a loss of energy density per unit volume and per unit weight of the battery assembly 10 may be minimized, and furthermore, the plurality of battery cells 110 may be more stably supported to further ensure structural and mechanical rigidity.

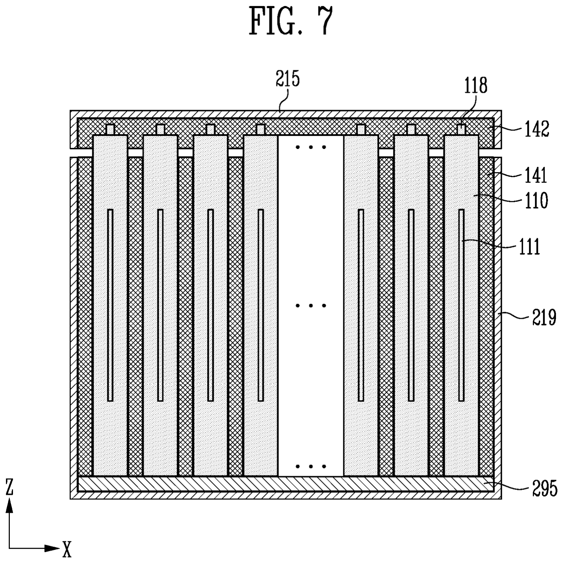

Fig. 7 is a view illustrating an example in which the battery cell, the first barrier, and the second barrier are disposed inside the housing case.

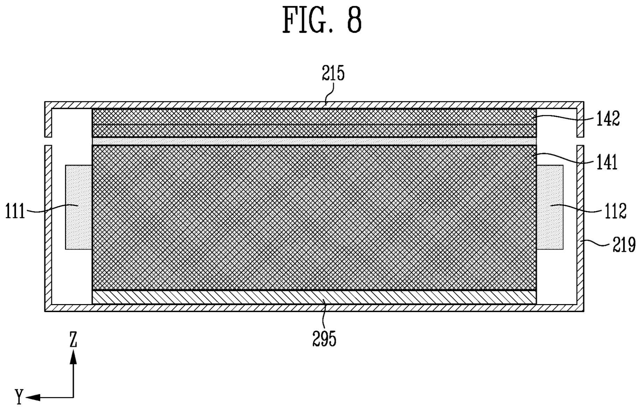

Fig. 8 is a view in the X-direction of Fig. 7, illustrating an embodiment in which the battery cell, the first barrier, and the second barrier are disposed inside the housing case.

Referring to Figs. 7 and 8, in an embodiment, the plurality of battery cells 110 and the first barrier 141 may be stacked in the preset stacking direction, the housing case 200 may comprise a housing body 219 having opening and the housing cover 215 coupled to the housing body 219 to cover the opened surface, and the second barrier 142 may be disposed between the plurality of battery cells 110 and the housing cover 215.

As illustrated in Figs. 7 and 8, the first barrier 141 may be stacked with the plurality of battery cells 110 to constitute the battery cell stack 100, and the second barrier 142 may be disposed between the plurality of battery cells 110 and the housing cover 215. Thus, in the flame, heat, and/or gas generated from the battery cell 110 at which the ignition starts, flame, heat, and/or gas propagated in the stacking direction and flame, heat, and/or gas propagated upward may be blocked by the first barrier 141 and the second barrier 142 to minimize or suppress the propagation of the flame, heat, and/or gas to adjacent battery cell 110 or other components within the battery assembly 10, thereby effectively delaying the progression of a thermal runaway event and further stopping the event.

Furthermore, a loss of energy density per unit volume and per unit weight of the battery assembly 10 may be minimized, and furthermore, the plurality of battery cells 110 may be more stably supported to further ensure structural and mechanical rigidity.

As for the details of the first barrier 141 and the second barrier 142, the descriptions given above with reference to Figs. 1 to 6 may be applied as they are, and thus, duplicated descriptions will be omitted below.

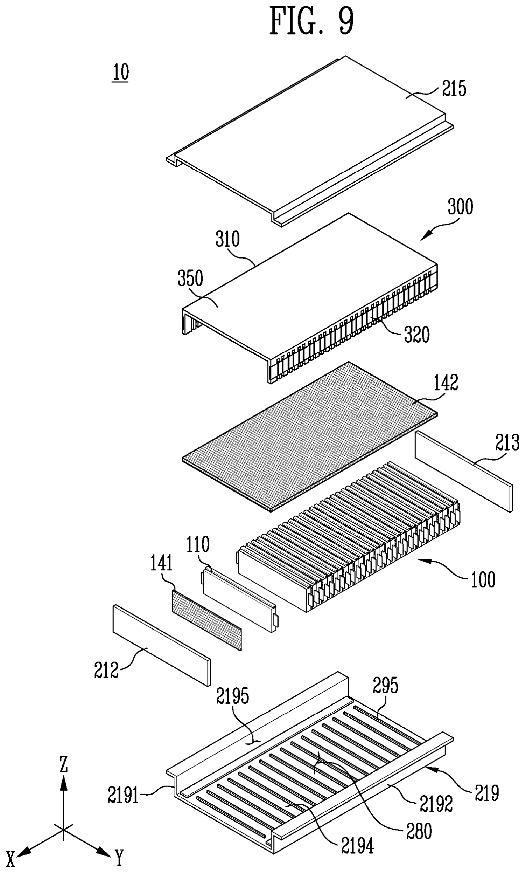

Fig. 9 is a view illustrating another example of the battery assembly according to an embodiment of the present disclosure.

Referring again to Fig. 9, in an embodiment, the battery assembly 10 may further comprise a busbar assembly 300 including a busbar electrically connected to the plurality of battery cells 110 and a busbar frame supporting the busbar.

In an embodiment, the busbar may be electrically connected to the plurality of battery cells 110 to allow electrical energy generated by the plurality of battery cells 110 to be supplied to the outside, or to allow electrical energy supplied from the outside to be supplied to each of the battery cells 110.

Referring to Fig. 9, in an embodiment, the busbar frame may comprise a pair of side parts 310 and 320 extending along the stacking direction of the plurality of battery cells 110 and a base part 350 connecting the pair of side parts 310 and 320 to each other.

As described above, the busbar assembly 300 may comprise the busbar and the busbar frame. The busbar frame may comprise a pair of first busbar frames extending in the stacking direction and a second busbar frame connecting the pair of first busbar frames to each other.

For example, with respect to the illustration of Fig. 9, each of the pair of first busbar frames may extend in the X direction, and the pair of first busbar frames extending in the X direction may be disposed at both ends of the plurality of battery cells 110 in the Y direction, respectively.

Referring again to Fig. 9, for example, the second busbar frame may be configured to be parallel to an XY plane and may be configured to connect the pair of first busbar frames to each other. In such an embodiment, the second busbar frame may be configured and disposed to additionally support or cover the plurality of battery cells 110 in the Z direction.

In such an embodiment, the busbar frame may be provided in a shape of a channel or a U-shape as a whole. According to such an embodiment, the busbar assembly 300 may be provided in the shape of the channel or the U-shape as a whole.

In an exemplary embodiment, the pair of first busbar frames and the second busbar frame may be configured in a manner in which separately provided components are respectively coupled through separate coupling members. On the other hand, in an exemplary embodiment, the pair of first busbar frames and the second busbar frame may be configured as an integrated structure.

The busbars may be mounted on the pair of first busbar frames. In an exemplary embodiment, the busbar may be provided in a plurality of independent pieces and may be mounted on the pair of first busbar frames along the stacking direction. For example, the plurality of busbars may be mounted on one of the pair of first busbar frames as described above, and the plurality of busbars may be mounted on the other one of the pair of first busbar frames as described above. In another exemplary embodiment, the busbar may be provided in a pair of busbars extending in the stacking direction and may be respectively mounted on the pair of first busbar frames.

When considering the above mounting examples, the busbar assembly 300 may have a structure including the pair of first busbar frames extending in the stacking direction, the second busbar frame connecting the pair of first busbar frames to each other, and the busbars respectively mounted on the pair of first busbar frames. In the structure of the busbar assembly 300, the pair of side parts 310 and 320 may refer to the pair of first busbar frames to which the busbars are mounted in the busbar assembly 300, and the base part 350 may refer to the second busbar frame.

Furthermore, when considering the configuration of the busbar frame described above, in an exemplary embodiment, the pair of side parts 310 and 320 and the base part 350 may be provided separately and then be coupled to each other through the separate coupling members. On the other hand, in an exemplary embodiment, the pair of side parts 310 and 320 and the base part 350 may be configured as the integrated structure.

The busbar or the busbars respectively mounted on the pair of first busbar frames, which are defined as one component of the pair of side parts 310 and 320, may be disposed in a protruding direction of lead tabs of each of the battery cells 110 so as to be connected to the lead tabs. In an exemplary embodiment, the lead tabs may be inserted into slots defined in the busbars at corresponding positions and thus may be connected to the busbars.

Referring to the above-described embodiment, in an embodiment as illustrated in Fig. 9, the battery pack 100 may further comprise the busbar assembly 300 including the busbar electrically connected to the plurality of battery cells 110 and the busbar frame supporting the busbar, and the second barrier 142 may be disposed between the plurality of battery cells 110 and the busbar assembly 300. According to the above-described definition, the second barrier 142 may be disposed between the plurality of battery cells 110 and the busbar assembly 300.

In a specific embodiment, the busbar assembly 300 may comprise the pair of side parts 310 and 320 extending in the stacking direction of the plurality of battery cells 110 and the base part 350 connecting the pair of side parts 310 and 320 to each other, and the second barrier 142 may be disposed between the plurality of battery cells 110 and the base part 350. According to the above-described definition, the second barrier 142 may be disposed between the plurality of battery cells 110 and the base part 350.

Referring to Fig. 9, in such an embodiment, the second barrier 142 may be disposed in the +Z direction with respect to the plurality of battery cells 110, specifically, the battery cell stack 100. In such an embodiment, referring to Fig. 9, the plurality of battery cells 110, the second barrier 142, the base part 350, and the housing cover 215 may be sequentially disposed along the +Z direction.

The battery assembly according to an example of the present disclosure may be preferably used as a power source for small-sized devices and may also be preferably used as a power source for medium and large-sized devices. Non-limiting examples of the small-sized devices include mobile phones, laptop computers, cameras, etc., and non-limiting examples of the medium and large-sized devices include electric vehicles, hybrid electric vehicles, plug-in hybrid electric vehicles, power storage systems, etc., but are not limited thereto.

It is understood by those skilled in the art that the plurality of exemplary embodiments described above are specific examples of the following aspects.

Aspect 1: A battery assembly comprising: a plurality of battery cells; at least one first barrier; and a housing case configured to enclose the plurality of battery cells and the first barrier, wherein the first barrier comprises an exterior and an endothermic material enclosed in the exterior, and wherein the endothermic material comprises a hydrogel comprising a polymer and water.

Aspect 2: The battery assembly according to Aspect 1, wherein at least a portion of the exterior has a melting point of about 80°C to about 120°C.

Aspect 3: The battery assembly according to Aspect 1 or 2, wherein the polymer is a lithium-stable polymer.

Aspect 4: The battery assembly according to any one of Aspects 1 to 3, wherein the polymer comprises at least one selected from the group consisting of polyethylene glycol, polyvinylpyrrolidone, polyethyleneimine, polyacrylonitrile, polyvinyl alcohol, polyethylene oxide, polyacrylic acid, and polyacrylate; or comprises two or more copolymers thereof, preferably, the polymer comprises polyethylene glycol.

Aspect 5: The battery assembly according to any one of Aspects 1 to 4, wherein the hydrogel comprises a cross-linking reaction product of polyethylene glycol diacrylate.

Aspect 6: The battery assembly according to any one of Aspects 1 to 5, wherein the hydrogel comprises the polymer and water at a weight ratio of about 2:8 to about 9:1 of polymer:water, preferably, the hydrogel comprises the polymer and water at a weight ratio of about 4:6 to about 6:4 polymer:water.

Aspect 7: The battery assembly according to any one of Aspects 1 to 6, wherein the plurality of battery cells and the first barrier are stacked in a preset stacking direction.

Aspect 8: The battery assembly according to any one of Aspects 1 to 7, wherein (a) the first barrier has a thickness of that is about 0.05 times to about 0.5 times the thickness of a battery cell within the plurality of battery cells, and/or (b) the first barrier has a height that is lower than the height of a battery cell within the plurality of battery cells.

Aspect 9: The battery assembly according to any one of Aspects 1 to 8, wherein the first barrier has a weight in a range of about 15 g to about 200 g.

Aspect 10: The battery assembly according to any one of Aspects 1 to 9, wherein the first barrier absorbs about 25 kJ to about 300 kJ when heated from a temperature of about 25°C to about 100°C is.

Aspect 11: A battery assembly comprising: a plurality of battery cells; at least one second barrier, and a housing case configured to enclose the plurality of battery cells and the second barrier, wherein the housing case comprises a housing body comprising an opening and a housing cover coupled to the housing body to cover the opening, wherein the second barrier is disposed between the plurality of battery cells and the housing cover, wherein the second barrier comprises an exterior and an endothermic material enclosed in the exterior, and wherein the endothermic material comprises a hydrogel comprising a polymer and water.

Aspect 12: The battery assembly according to Aspect 11, wherein the second barrier comprises a plurality of grooves, and wherein at least a portion of the plurality of battery cells is inserted into at least a portion of the plurality of grooves, preferably, the grooves are oriented in the same direction.

Aspect 13: The battery assembly according to Aspect 11 or 12, wherein (a) a unit of the second barrier has a weight in a range of about 15 g to about 85 g, and/or (b) a unit of the second barrier absorbs about 25 kJ to about 120 kJ when heated from a temperature of about 25°C to about 100°C.

Aspect 14: The battery assembly according to any one of Aspects 11 to 13, further comprising a busbar assembly, wherein the busbar assembly comprises a busbar electrically connected to the plurality of battery cells and a busbar frame configured to support the busbar, and wherein the second barrier is disposed between the plurality of battery cells and the busbar assembly.

Aspect 15: The battery assembly according to any one of Aspects 1 to 14, the plurality of battery cells and the first barrier are stacked in a preset stacking direction, and the housing case comprises a housing body having an opening and a housing cover coupled to the housing body to cover the opening, wherein the second barrier is disposed between the plurality of battery cells and the housing cover.

Hereinafter, embodiments of the present disclosure will be further described with reference to specific experimental examples. Embodiments and Comparative Examples included in the experimental examples are merely illustrative and are not intended to limit the appended claims. It is obvious to those skilled in the art that various changes and modifications can be made to the examples within the scope of the disclosure and the spirit of the present disclosure, and it is also obvious that such variations and modifications fall within the scope of the appended claims.

**Examples**

(Example)

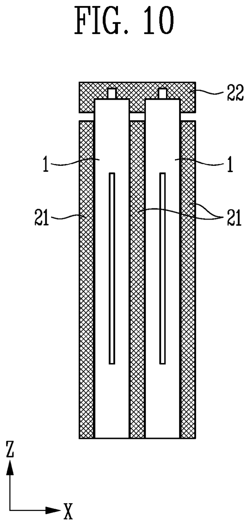

Fig. 10 is a schematic view for explaining an arrangement structure of the battery cell and the first and second barriers as described in an Example simulation.

A temperature change of the battery cell over time was calculated through a simulation in which a normal discharge (1C-rate) situation and a thermal runaway situation are simulated. In detail, ANSYS FLUENT from ANSYS was used as simulation software, and an Equivalent Circuit Model (ECM) was constructed based on a multi-scale multi-domain (MSMD) analysis technique built into the software.

A battery cell temperature during normal discharge was calculated using a Joule heat value calculated by applying a simulated discharge current value to experimentally measured internal resistance data of the battery cell for each SOC during the normal discharge. A battery cell temperature during thermal runaway was calculated using experimental result data obtained during through-trigging experiments or heating trigging experiments.

Based on the above data, referring to Fig. 10, a cooling effect was simulated by calculating heat absorbed by the first and second barriers 21 and 22 having a certain thickness through an upper end of the battery cell 1 in the stacking direction of the battery cells 1. In detail, three first barriers 21 and two battery cells 1 were alternately stacked in the stacking direction of the battery cells, and the second barrier 22 was set to cover the upper end of the stack of the stacked battery cells 1 and the first barriers 21. Here, the arrangement structure of the battery cells 1 and the first and second barriers 21 and 22 set in this manner may be illustrated in Fig. 10.

Here, it is assumed that one of the battery cells 1 has been triggered when the thermal runaway situation occurs, and the temperature was measured based on the temperatures of the remaining battery cells other than the triggered battery cell.

A composition of the endothermic material of the first barrier was set as polyethylene glycol:water = 5:5 (w/w), with a weight of about 38.5 g, and a composition of the endothermic material of the second barrier was also set as polyethylene glycol:water = 5:5 (w/w), with a weight of about 77 g.

(Comparative Example 1)

Except for not setting the use of each of the first and second barrier, the simulation was performed in the same manner as in the Example. That is, Comparative Example 1 is a comparative example in which the first and second barriers 21 and 22 are not used, unlike the illustration of Fig. 10.

(Comparative Example 2)

Except for setting the composition of the endothermic material of each barrier to only polyethylene glycol, the simulation was performed in the same manner as in Example.

(Comparative Example 3)

Except for setting the composition of the endothermic material of each barrier to only water, the simulation was performed in the same manner as in Example.

**Evaluation Example**

**Evaluation example 1: Evaluation of thermal runaway delay suppression effect**

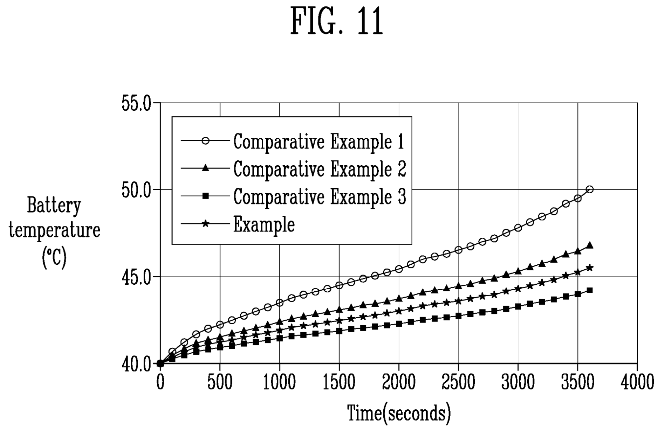

Fig. 11 is a graph illustrating a change in battery cell temperature over time under the normal discharge situation in simulations of Example and Comparative Examples.

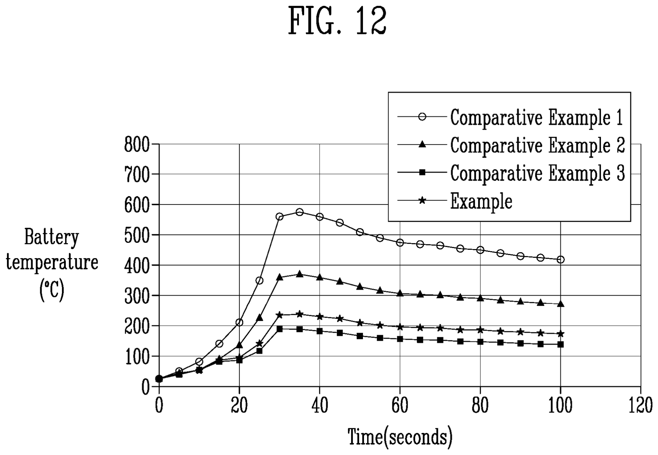

Fig. 12 is a graph illustrating a change in battery cell temperature over time under the thermal runaway situation in simulations of Example and Comparative Examples.

Referring to Fig. 11, it was seen that, in the case of Example, an increase in temperature of the battery cell is slower compared to Comparative Examples 1 and 2 during the normal discharge at a 1C rate. Referring to Fig. 12, it was seen that, in the case of Example, a maximum temperature of the battery cell adjacent to a trigger cell is significantly lower compared to Comparative Examples 1 and 2 during the thermal runaway situation. In addition, it was seen that the maximum temperature is substantially the same as that of Comparative Example 3, which uses only water as the endothermic material. Thus, in the case of the battery assembly using the first and second barriers according to an embodiment of the present disclosure as in Example, it was seen that delay and suppression effects of the propagation of thermal runaway situation are excellent when the thermal runaway situation occurs.

**Evaluation example 2: Evaluation of reactivity with lithium**

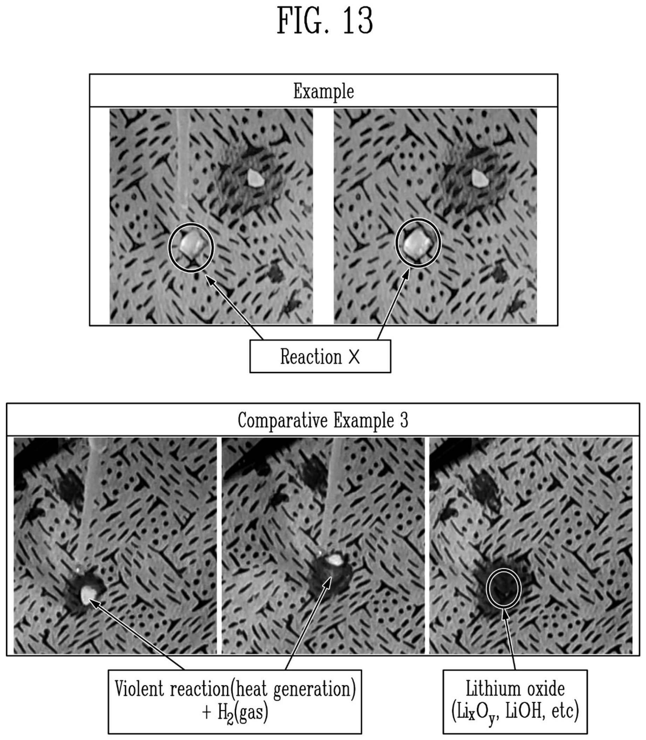

Fig. 13 is a photograph illustrating an experimental example in which each of an endothermic material set in Example and an endothermic material set in Comparative Example 3 react with a lithium metal.

A mixture with the same composition as the endothermic material set in Example was prepared. After preparing the endothermic material set in Comparative Example 3, each of the materials dropped to the lithium metal using a dropper to induce reaction. Whether the reaction occurs and its process are illustrated in Fig. 13.

Referring to Fig. 13, in the case of the endothermic material set in Example, no particular reaction was observed even when the endothermic material drops to be in contact with the lithium metal. However, in the case of the endothermic material set in Comparative Example 3, it was seen that violent exothermic reaction occurs in addition to generation of various reaction products when the endothermic material drops to be in contact with the lithium metal.

According to the example of the present disclosure, the first and second barriers stably absorb the heat even when being in contact with the heat and/or high temperature/high pressure gases and furthermore suppresses the contacted flame, is chemically stable, and is manufactured in various forms without the structural restriction may be provided.

According to another example of the present disclosure, the battery assembly in which the thermal runaway phenomenon is effectively delayed or suppressed when the thermal runaway event occurs may be provided.

According to further another example of the present disclosure, the battery assembly having the improved stability and structural stability may be provided.

The present disclosure may be widely applied in fields of the electric vehicles, the battery charging stations, the energy storage systems (ESSs), and other green technologies such as the photovoltaics and the wind power utilizing batteries. In addition, the present disclosure may be used in eco-friendly mobility including the electric vehicles and the hybrid vehicles, in order to prevent the climate change by suppressing the air pollution and greenhouse gas emission.

The above description is merely an example that applies the principles of the present disclosure, and other configurations may be included within the scope of the present disclosure without departing from its scope.

**Claims**

1.   A battery assembly comprising:

    a plurality of battery cells;
    at least one first barrier; and
    a housing case configured to enclose the plurality of battery cells and the first barrier,
    wherein the first barrier comprises an exterior and an endothermic material enclosed in the exterior, and
    wherein the endothermic material comprises a hydrogel comprising a polymer and water.

2.   The battery assembly according to claim 1, wherein at least a portion of the exterior has a melting point of about 80°C to about 120°C.

3.   The battery assembly according to claim 1 or 2, wherein the polymer is a lithium-stable polymer.

4.   The battery assembly according to any one of claims 1 to 3, wherein the polymer comprises at least one selected from the group consisting of polyethylene glycol, polyvinylpyrrolidone, polyethyleneimine, polyacrylonitrile, polyvinyl alcohol, polyethylene oxide, polyacrylic acid, and polyacrylate; or comprises two or more copolymers thereof, preferably, the polymer comprises polyethylene glycol.

5.   The battery assembly according to any one of claims 1 to 4, wherein the hydrogel comprises a cross-linking reaction product of polyethylene glycol diacrylate.

6.   The battery assembly according to any one of claims 1 to 5, wherein the hydrogel comprises the polymer and water at a weight ratio of about 2:8 to about 9:1 of polymer:water, preferably, the hydrogel comprises the polymer and water at a weight ratio of about 4:6 to about 6:4 polymer:water.

7.   The battery assembly according to any one of claims 1 to 6, wherein the plurality of battery cells and the first barrier are stacked in a preset stacking direction.

8.   The battery assembly according to any one of claims 1 to 7, wherein (a) the first barrier has a thickness of that is about 0.05 times to about 0.5 times the thickness of a battery cell within the plurality of battery cells, and/or (b) the first barrier has a height that is lower than the height of a battery cell within the plurality of battery cells.

9. The battery assembly according to any one of claims 1 to 8, wherein the first barrier has a weight in a range of about 15 g to about 200 g.

10. The battery assembly according to any one of claims 1 to 9, wherein the first barrier absorbs about 25 kJ to about 300 kJ when heated from a temperature of about 25°C to about 100°C is.

11. A battery assembly comprising:

a plurality of battery cells;
at least one second barrier, and
a housing case configured to enclose the plurality of battery cells and the second barrier,
wherein the housing case comprises a housing body comprising an opening and a housing cover coupled to the housing body to cover the opening,
wherein the second barrier is disposed between the plurality of battery cells and the housing cover,
wherein the second barrier comprises an exterior and an endothermic material enclosed in the exterior, and
wherein the endothermic material comprises a hydrogel comprising a polymer and water.

12. The battery assembly according to claim 11, wherein the second barrier comprises a plurality of grooves, and wherein at least a portion of the plurality of battery cells is inserted into at least a portion of the plurality of grooves, preferably, the grooves are oriented in the same direction.

13. The battery assembly according to claim 11 or 12, wherein (a) a unit of the second barrier has a weight in a range of about 15 g to about 85 g, and/or (b) a unit of the second barrier absorbs about 25 kJ to about 120 kJ when heated from a temperature of about 25°C to about 100°C.

14. The battery assembly according to any one of claims 11 to 13, further comprising a busbar assembly, wherein the busbar assembly comprises a busbar electrically connected to the plurality of battery cells and a busbar frame configured to support the busbar, and
wherein the second barrier is disposed between the plurality of battery cells and the busbar assembly.

15. The battery assembly according to any one of claims 1 to 14,

the plurality of battery cells and the first barrier are stacked in a preset stacking direction, and
the housing case comprises a housing body having an opening and a housing cover coupled to the housing body to cover the opening,
wherein the second barrier is disposed between the plurality of battery cells and the housing cover.

# FIG. 1

# FIG. 2

145
148

# FIG. 3

110

118

112

115

111

Z

Y X

# FIG. 4

# FIG. 5

1421 {
1421b
1421a
}

142

Z
X

# FIG. 6

118

142

110

111

...    ...

Z
X

# FIG. 7

# FIG. 8

# FIG. 9

# FIG. 10

# FIG. 11

# FIG. 12

# FIG. 13

Example

Reaction X

Comparative Example 3

Violent reaction(heat generation) + H$_2$(gas)

Lithium oxide (Li$_x$O$_y$, LiOH, etc)

# EP 4 779 778 A1

Europäisches
Patentamt

European
Patent Office

Office européen
des brevets

## EUROPEAN SEARCH REPORT

**Application Number**

EP 26 15 1350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 632 876 A1 (SK ON CO LTD [KR]) 15 October 2025 (2025-10-15) * claims 1-7; figures * * paragraph [0052] - paragraph [0057] * ----- | 1-4,7,8 | INV. H01M50/293 H01M10/658 H01M50/291 H01M50/209 |
| X | US 2024/021918 A1 (BAUSCH BRUNO [DE] ET AL) 18 January 2024 (2024-01-18) * claims 16-19; figures * * paragraph [0019] - paragraph [0022] * * paragraph [0034] - paragraph [0035] * ----- | 1-3, 5-10, 12-15 | |
| E | EP 4 715 973 A2 (SK ON CO LTD [KR]) 25 March 2026 (2026-03-25) * paragraph [0024] - paragraph [0025]; figures * * paragraph [0034] * * paragraph [0037] - paragraph [0039] * * paragraph [0054] - paragraph [0055] * ----- | 1-4, 7-11,13, 15 | |
| X,P | EP 4 601 079 A1 (BYD CO LTD [CN]) 13 August 2025 (2025-08-13) * paragraph [0029] - paragraph [0031] * * paragraph [0039] * ----- | 1,2,7,8 | **TECHNICAL FIELDS SEARCHED (IPC)** H01M |
| X | CN 118 906 623 A (SHANGWUYANG WUHAN TECH CO LTD) 8 November 2024 (2024-11-08) * paragraphs [0001] - [0003], [0005], [0014], [0017] * ----- | 1-4,7-15 | |
| X | EP 3 916 835 A1 (ZENTRUM FUER SONNENENERGIE UND WASSERSTOFF FORSCHUNG BADEN WUERTTEMBER) 1 December 2021 (2021-12-01) * the whole document * ----- | 1-3,7-15 | |

-/--

The present search report has been drawn up for all claims

| Place of search | Date of completion of the search | Examiner |
|---|---|---|
| Munich | 10 June 2026 | Brisson, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

page 1 of 2

**EUROPEAN SEARCH REPORT**

Application Number

EP 26 15 1350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 507 951 A (BYD CO LTD; SHANGHAI BYD CO LTD) 16 August 2024 (2024-08-16)<br>* paragraph [0102] *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 10 June 2026 | Brisson, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 1350

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2026

| Patent document cited in search report | | | Publication date | Patent family member(s) | | | Publication date |
|---|---|---|---|---|---|---|---|
| EP 4632876 | A1 | | 15-10-2025 | CN | 120784548 | A | 14-10-2025 |
| | | | | EP | 4632876 | A1 | 15-10-2025 |
| | | | | KR | 20250149333 | A | 16-10-2025 |
| | | | | US | 2025316871 | A1 | 09-10-2025 |
| US 2024021918 | A1 | | 18-01-2024 | CN | 116745973 | A | 12-09-2023 |
| | | | | DE | 102021131311 | A1 | 01-06-2023 |
| | | | | EP | 4229704 | A1 | 23-08-2023 |
| | | | | JP | 7642828 | B2 | 10-03-2025 |
| | | | | JP | 2024502967 | A | 24-01-2024 |
| | | | | KR | 20230110785 | A | 25-07-2023 |
| | | | | US | 2024021918 | A1 | 18-01-2024 |
| | | | | WO | 2023094666 | A1 | 01-06-2023 |
| EP 4715973 | A2 | | 25-03-2026 | CN | 121726610 | A | 24-03-2026 |
| | | | | EP | 4715973 | A2 | 25-03-2026 |
| | | | | KR | 20260043666 | A | 01-04-2026 |
| | | | | US | 20260088397 | A1 | 26-03-2026 |
| EP 4601079 | A1 | | 13-08-2025 | CN | 120453552 | A | 08-08-2025 |
| | | | | EP | 4601079 | A1 | 13-08-2025 |
| | | | | WO | 2025167293 | A1 | 14-08-2025 |
| CN 118906623 | A | | 08-11-2024 | NONE | | | |
| EP 3916835 | A1 | | 01-12-2021 | CN | 115943519 | A | 07-04-2023 |
| | | | | EP | 3916835 | A1 | 01-12-2021 |
| | | | | JP | 2023527215 | A | 27-06-2023 |
| | | | | KR | 20230021013 | A | 13-02-2023 |
| | | | | US | 2023216137 | A1 | 06-07-2023 |
| | | | | WO | 2021239378 | A1 | 02-12-2021 |
| CN 118507951 | A | | 16-08-2024 | NONE | | | |

EPO FORM P0459

For more details about this annex : see Official Journal of the European Patent Office, No. 12/82